# EUROPEAN PATENT APPLICATION

(11) **EP 4 202 916 A1**
(43) Date of publication of application: **28.06.2023**
(21) Application number: 22202588.4
(22) Date of filing: 19.10.2022
(51) Int. Cl.: G10H 1/00

(54) **INFORMATION PROCESSING DEVICE, TERMINAL, INFORMATION PROCESSING METHOD, AND PROGRAM**

(30) Priority: 27.12.2021 JP 2021212734
(71) Applicant: Roland Corporation, Shizuoka 431-1304 (JP)
(72) Inventor: NAGATA, Akihiro, Shizuoka, 431-1304 (JP)
(74) Representative: Becker, Eberhard

(57) **Abstract**

An information processing device (3) includes a control part (31). The control part (31) executes: receiving operation information of an electronic musical instrument (2) from the electronic musical instrument (2); and transmitting operation associated information of the electronic musical instrument (2) corresponding to the operation information to a terminal (4) of a user (11) of the electronic musical instrument (2), the terminal (4) being different from the electronic musical instrument (2).

## Description

### BACKGROUND

### [Technical Field]

The disclosure relates to an information processing device, a terminal, an information processing method, and a program.

### [Related Art]

Conventionally, an electronic musical instrument has been disclosed to use a large display which displays illustrative texts about functions of a function screen or the like in a help mode (e.g., Patent Document 1). In addition, a server capable of being online with a user terminal has been disclosed to restrict items or contents of an online manual that can be browsed in response to a browsing request, or change a display sequence of items or contents of the online manual, based on user information associated with the browsing request of the online manual (e.g., Patent Document 2).

### [Related Art Documents]

### [Patent Documents]

[Patent Document 1] Japanese Patent Application Laid-Open No. H7-253779
[Patent Document 2] Japanese Patent Application Laid-Open No. 2021-47762

### SUMMARY

### Problems to Be Solved

An objective of the disclosure is to provide an information processing device, a terminal, and an information processing method program capable of suitably providing a user of an electronic musical instrument with information related to an operation of the electronic musical instrument.

### Means for Solving Problems

According to an embodiment of the disclosure, an information processing device includes a control part which executes: receiving operation information of an electronic musical instrument from the electronic musical instrument; and transmitting operation associated information of the electronic musical instrument corresponding to the operation information to a terminal of a user of the electronic musical instrument, the terminal being different from the electronic musical instrument.

According to another embodiment of the disclosure, a terminal of a user of an electronic musical instrument is different from the electronic musical instrument and includes a control part which executes: receiving, from an information processing device receiving operation information of the electronic musical instrument from the electronic musical instrument, operation associated information of the electronic musical instrument corresponding to the operation information; and displaying, on a display device, information based on the operation associated information.

The disclosure may include information processing methods performed by the information processing device and the terminal described above, programs causing each of the information processing device and the terminal described above to execute the information processing methods, and non-transitory storage media storing the programs.

### BRIEF DESCRIPTION OF THE DRAWINGS

FIG. 1 is a view showing a configuration example of an information processing system according to an embodiment.
FIG. 2 is a view showing a configuration example of an electronic musical instrument.
FIG. 3 is a view showing a configuration example of a server.
FIG. 4 is a view showing a configuration example of a terminal.
FIG. 5 is a flowchart showing a processing example in the electronic musical instrument.
FIG. 6 is a flowchart showing a processing example in the server.
FIG. 7 is a flowchart showing a processing example in the terminal.
FIG. 8 is a view illustrating an action example 1.
FIG. 9 is a view illustrating the action example 1.
FIG. 10 is a view illustrating the action example 1.
FIG. 11 is a view illustrating the action example 1.
FIG. 12 is a view illustrating the action example 1.
FIG. 13 is a view illustrating an action example 2.
FIG. 14 is a view illustrating an action example 3.
FIG. 15A and FIG. 15B are views illustrating an action example 4.
FIG. 16 is a view illustrating the action example 4.
FIG. 17A and FIG. 17B are views illustrating the action example 4.
FIG. 18 is a view illustrating the action example 4.
FIG. 19 is a view illustrating the action example 4.
FIG. 20A and FIG. 20B are views illustrating the action example 4.
FIG. 21 is a view illustrating the action example 4.
FIG. 22A and FIG. 22B are views illustrating the action example 4.

### DESCRIPTION OF THE EMBODIMENTS

Hereinafter, embodiments of the disclosure will be described with reference to the drawings. The configuration in the embodiments is exemplary, and the configuration of the embodiments may be appropriately changed without departing from the objective of the disclosure.

### <Information processing system>

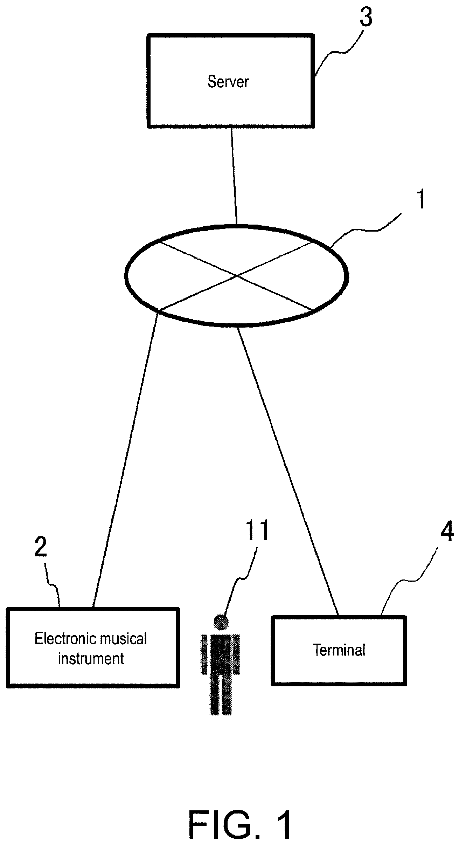

FIG. 1 is a view showing a configuration example of an information processing system according to an embodiment. In FIG. 1, the information processing system includes a network 1, and an electronic musical instrument 2, a server 3, and a terminal 4 respectively connected to the network 1.

The network 1 is a public network such as the Internet. The network 1 may be a wired network or a wireless network. The wireless network is, for example, a cellular network (e.g., long term evolution (LTE), 5th generation mobile communication system (5G), etc.), a wireless LAN (including WiFi), BLE, etc.

The electronic musical instrument 2 is a musical instrument played by a user 11 of the electronic musical instrument 2. The electronic musical instrument 2 is a keyboard instrument (e.g., a piano, an organ, a synthesizer, etc.), a string instrument (e.g., a guitar, etc.), a percussion instrument (e.g., a drum, a percussion, etc.), a wind instrument, etc. However, the type of the electronic musical instrument 2 is not limited to the above examples. The electronic musical instrument 2 also includes an effect imparting device (effector) which imparts a desired effect to an audio signal inputted from the outside or generated or reproduced internally.

### <Electronic musical instrument>

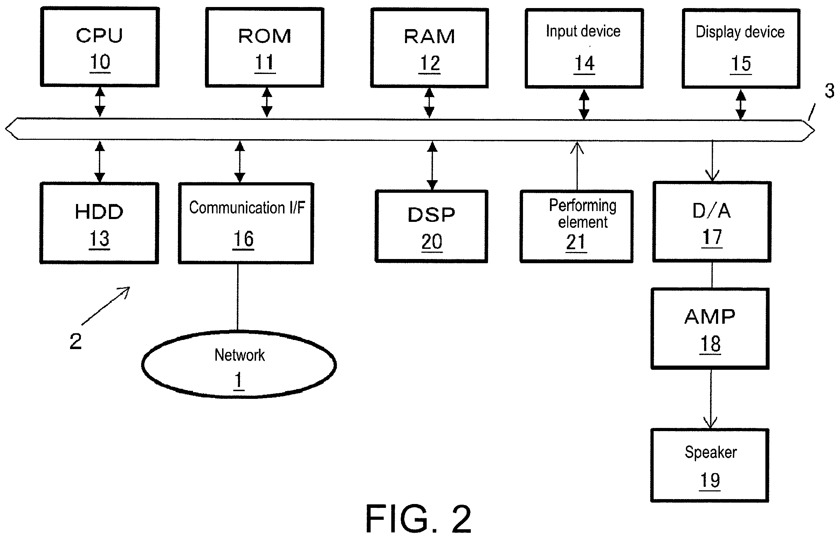

FIG. 2 shows a configuration example of the electronic musical instrument 2. The electronic musical instrument 2 includes a CPU 10, a ROM (read only memory) 11, a RAM (random access memory) 12, a hard disk drive (HDD) 13, an input device 14, a display device (display) 15, and a communication interface (communication I/F) 16, which are respectively connected to a bus 3.

The electronic musical instrument 2 further includes a digital-to-analog converter (D/A) 17, a DSP (digital signal processor) 20, and a performing element 21, which are respectively connected to the bus 3. An amplifier (AMP) 18 is connected to the D/A 17, and a speaker 19 is connected to the AMP 18.

The ROM 11 stores various programs executed by the CPU 10 and data used when executing the programs. The RAM 12 is used as a program expansion area, a work area of the CPU 10, a data storage area, etc. The HDD 13 stores programs, data used when executing the programs, music data, etc. The ROM 11 and the RAM 12 are examples of a main storage device, and the HDD 13 is an example of an auxiliary storage device. The main storage device and the auxiliary storage device are examples of non-transitory storage devices or storage media.

The input device 14 is a key, a button, a touch panel, etc. and is used for inputting information (including instructions and commands). Further, the input device 14 includes an operator for setting various parameters related to a sound, a volume, a pitch, a timbre, etc. outputted from the electronic musical instrument 2. The operator includes a button, a knob (dial), a sliders, etc. Further, the operator includes an operator (referred to as a performing element) used by the user 11 for playing the electronic musical instrument 2. The performing element is, for example, a keyboard, a string, a percussion surface, a pedal, etc. but is not limited thereto.

The display device 15 is used for displaying information. The display device 15 is, for example, a simple LCD display which displays texts, symbols, etc. using seven segments, and is restricted in terms of a display size, a display color, and displayable contents as compared with a display 45 provided in the terminal 4 to be described later.

The communication I/F 16 is connected to the network 1 and is responsible for processes related to communication. The D/A 17 converts an audio digital signal inputted via the bus 3 into an analog signal. The AMP 18 amplifies the analog signal. The speaker 19 emits a sound corresponding to the amplified analog signal.

The CPU 10 is a processor which controls the overall operation of the electronic musical instrument 2. Further, the CPU 10 controls various settings for the DSP 20. For example, the CPU 10 sets various parameters inputted using the input device 14 (operator) to the DSP 20. Further , to support the operation of the electronic musical instrument 2 performed by the user 11, the CPU 10 transmits, to the server 3, operation information indicating a content of the operation of the user 11 on the electronic musical instrument 2. In the electronic musical instrument 2, the network address of the server 3 is known.

The DSP 20 is a processor capable of generating, reproducing, or processing an audio signal by executing a program. By executing a program, according to an operation of the performing element 21, the DSP 20 may generate an audio signal based on various parameters set in advance in the DSP 20 and connect the audio signal to the D/A 17. Further, the DSP 20 may also perform an effect imparting process on an audio signal inputted from an external terminal (not shown) according to the set parameters, and connect the audio signal after the effect imparting to the D/A 17. Further, the DSP 20 may also perform a reproduction process of an audio signal based on an audio data stored in the HDD 13 or received from the network 1, and connect the reproduced audio signal to the D/A 17.

### <Server (cloud)>

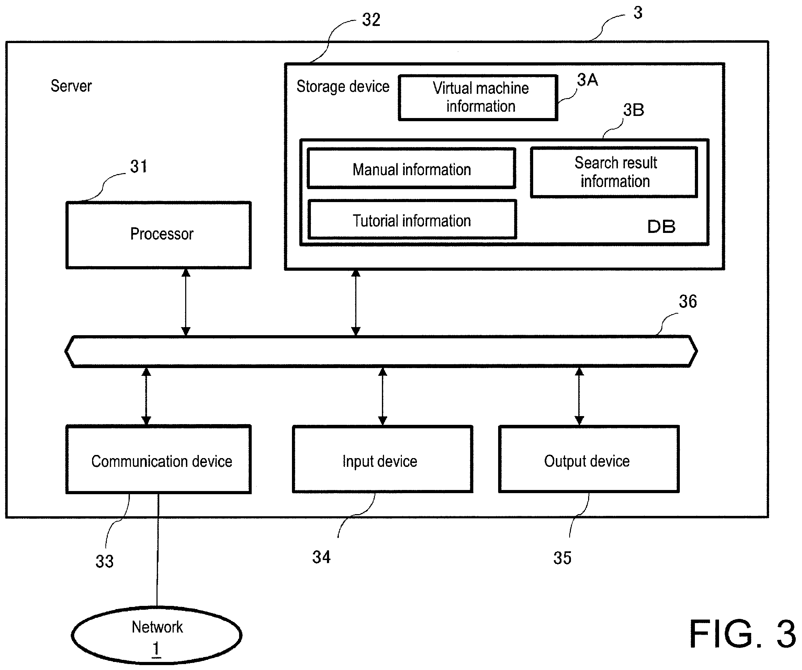

FIG. 3 is a view showing a configuration example of the server 3. The server 3 may be configured by using, for example, a general-purpose information processing device (computer) such as a personal computer (PC) or a workstation (WS), or a dedicated information processing device such as a server machine. The server 3 has a communication function and may be connected to the network 1 in a wired or wireless manner.

In FIG. 3, the server 3 includes a processor 31 serving as a processing part or a control part (controller), a storage device 32, a communication device 33, an input device 34, and an output device 35, which are connected to each other via a bus 36. The server 3 may be composed of one computer, or may be a set (cloud) of two or more computers.

The storage device 32 includes a main storage device and an auxiliary storage device. The main storage device is used as a program and data storage area, a program expansion area, a work area of programs, a buffer area of communication data, etc. The main storage device is composed of a RAM (random access memory) or a combination of a RAM and a ROM (read only memory). The auxiliary storage device is used as a data and program storage area. The auxiliary storage device may be, for example, a non-volatile storage medium such as a hard disk, a solid state drive (SSD), a flash memory, an EEPROM (electrically erasable programmable read-only memory), etc.

The communication device 33 is a circuit which performs a communication process, and acts as a transmission part and a reception part (communication part). For example, the communication device 33 is a network interface card (NIC). Further, the communication device 33 may be a wireless communication circuit which performs wireless communication (LTE, 5G, wireless LAN (Wi-Fi), BLE, etc.). Further, the communication device 33 may include both a circuit performing a wired communication process and a wireless communication circuit.

The input device 34 includes a key, a button, a pointing device, a touch panel, etc., and is used for inputting information. The input device 34 may include a microphone (voice input device). The output device 35 is, for example, a liquid crystal display or an organic EL display, and displays information and data. The output device 35 may include a printer or a speaker (audio output device).

The processor 31 is, for example, a CPU (central processing unit) or the like. The processor 31 performs various processes by executing various programs stored in the storage device 32.

In this embodiment, the storage device 32 stores virtual machine information 3A, a database (DB), etc. The virtual machine information 3A includes identifiers of operators provided in the electronic musical instrument 2, information indicating a state (setting parameters: on/off of a button, a value indicated by a knob or a slider, etc.) of each operator, etc. The information indicating a state of each operator is updated each time operation information of the electronic musical instrument 2 is received, and a current state of each operator of the electronic musical instrument 2 is stored. The DB 3B stores manual information of the electronic musical instrument 2, tutorial information of operations of the electronic musical instrument 2, information (search result information) searched from the network 1 related to an operation of the electronic musical instrument 2, etc.

The manual information includes data of an electronic manual of the electronic musical instrument 2. The tutorial information is information for illustrating an operation procedure of the electronic musical instrument 2 including, for example, one or more steps. The processor 31 performs a process (control) of reading, from the storage device 32, information (also simply referred to as associated information) corresponding to the operation information transmitted from the electronic musical instrument 2 and received by the communication device 33, generating operation associated information, and transmitting the operation associated information to the terminal 4.

In the server 3, the network addresses of the electronic musical instrument 2 and the terminal 4 are known. For example, the server 3 stores a database (user DB) which stores information of users (user information) in advance in the storage device 32. The user DB stores, for example, personal information (name, contact information, etc.) of the user 11, information of the electronic musical instrument 2 including the network address of the electronic musical instrument 2, and information of the terminal 4 including the network address of the terminal 4 in association with each other. The processor 31 may determine a destination (terminal 4) of the operation associated information by using the user information.

The operation associated information includes information corresponding to operation information of the electronic musical instrument 2 and information indicating an action mode of the terminal 4. For example, in the case where the action mode of the terminal 4 is a tutorial mode, according to the operation information, information indicating an operator to be operated by the user 11 and an operation method of the operator is read from the tutorial information stored in the storage device 32 and is included in the operation associated information. Further, the operation associated information includes an instruction for the terminal 4. The instruction includes an instruction for displaying the information read from the storage device 32 or the like.

### <Terminal>

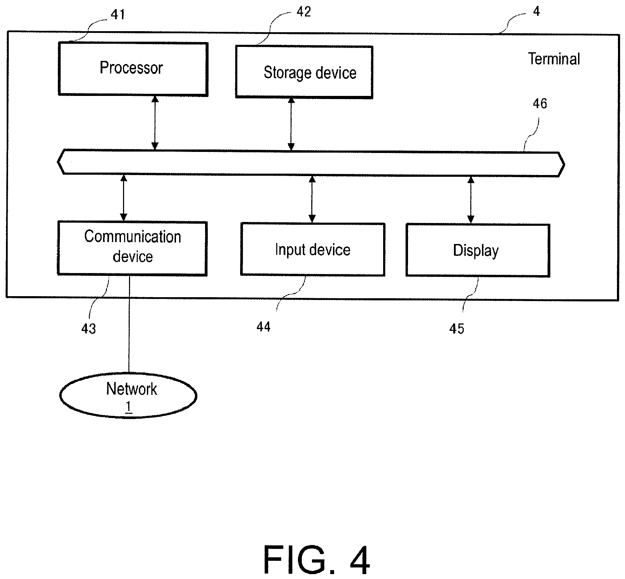

FIG. 4 is a view showing a configuration example of the terminal 4. The terminal 4 has a communication function and may be connected to the network 1 in a wired or wireless manner. The terminal 4 may be a fixed terminal or a mobile terminal. The fixed terminal includes, for example, the PC and the WS described above. The mobile terminal is, for example, a smart device including a smartphone, a tablet terminal, etc. However, the mobile terminal may also be a device other than the smart device.

The terminal 4 includes a processor 41 serving as a processing part or a control part (controller), a storage device 42, a communication device 43, an input device 44, and a display 45, which are connected to each other via a bus 46.

The same devices as the processor 31, the storage device 32, the communication device 33, and the input device 34 may be applied as the processor 41, the storage device 42, the communication device 43, and the input device 44. The display 45 has higher performance than the display device of the electronic musical instrument 2, and may display images and videos such as texts, figures, and photographs. A sound may also be outputted according to the image or video.

The processor 41 performs a process (control) of displaying, on the display 45, for example, a screen based on the operation associated information received from the server 3 by executing a program stored in the storage device 42.

As the processors 31 and 41 described above, a plurality of CPUs may be applied, or a multi-core type CPU may be applied. At least a part of the process performed by the CPU may be performed by a processor other than the CPU such as a DSP (digital signal processor) or a GPU (graphical processing unit). Further, at least a part of the process performed by the CPU may be performed by a dedicated or general-purpose integrated circuit (hardware). The integrated circuit includes an ASIC (application specific integrated circuit), an FPGA (field programmable gate array), etc. Alternatively, at least a part of the process performed by the CPU may be executed by a combination of a processor and an integrated circuit. The combination is referred to as, for example, a microcontroller (MCU), an SoC (system-on-a-chip), a system LSI, a chipset, etc.

### <Processing example of electronic musical instrument>

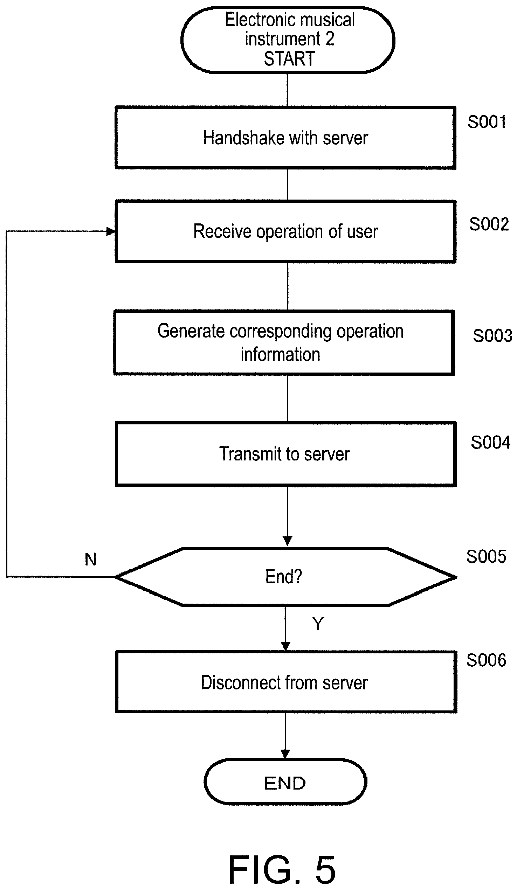

FIG. 5 is a flowchart showing a processing example in the electronic musical instrument 2. The process of FIG. 5 is performed by, for example, the CPU 10. A trigger (start condition) of the process of FIG. 5 may be set as appropriate. In step S001, the CPU 10 performs a handshake with the server 3 to establish a communication line.

In step S002, the CPU 10 waits for an operation of the user 11 and receives an operation of the user 11 on the input device 14 (operator).

In step S003, the CPU 10 generates operation information corresponding to the received operation. The operation information includes information indicating the operator operated by the user 11 and information indicating a state of the operator. The information indicating the operator is information which specifies the operated button, slider, knob, etc., and the information indicating the state of the operator is a parameter value specified by on/off of the button, a time the button is pressed, and a position of the slider or the knob.

In step S004, the CPU 10 transmits the operation information to the server 3 by using the communication I/F 16.

In step S005, the CPU 10 determines whether to end the process. For example, if it is determined that the process is to be ended when the power of the electronic musical instrument 2 is turned off or an end operation is performed, the process proceeds to step S006, and if not, the process returns to step S002.

In step S006, the CPU 10 performs an end process including disconnecting from the server 3 and ends the process of FIG. 5.

### <Processing example of server>

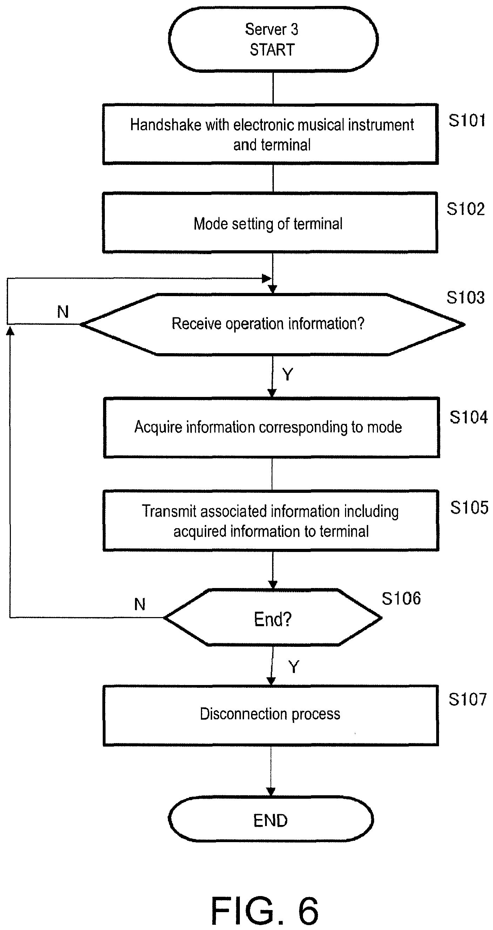

FIG. 6 is a flowchart showing a processing example in the server 3. The process shown in FIG. 6 is performed by the processor 31 of the server 3. In step S101, the processor 31 performs a handshake with the electronic musical instrument 2 and the terminal 4. For example, the processor 31 receives a connection request from one of the electronic musical instrument 2 and the terminal 4, and performs a handshake with the connection request source. At this time, the processor 31 determines another of the electronic musical instrument 2 and the terminal 4 associated with the connection request source by using the user information stored in the storage device 32, and transmits a connection request to the another of the electronic musical instrument 2 and the terminal 4 by using the communication device 33. Accordingly, the server 3 establishes a communication line with the electronic musical instrument 2 and the terminal 4.

In step S102, mode setting of the terminal 4 is performed. That is, the processor 31 receives, from the terminal 4, information indicating an action mode (any one of a tutorial mode, a manual mode, and a search mode) of the terminal 4 and sets the action mode of the terminal 4. A reference destination (access address) of information stored in the storage device 32 is changed according to the action mode.

In step S103, the processor 31 enters a state of waiting for operation information from the electronic musical instrument 2, and upon acquisition of the operation information transmitted from the electronic musical instrument 2 and received by the communication device 33, the process proceeds to step S104.

In step S104, the processor 31 reads, from the storage device 32, information corresponding to the operation information and the action mode. For example, if the action mode is the tutorial mode, the processor 31 refers to the tutorial information stored in the storage device 32 and reads information corresponding to the operation information from the storage device 32. If the action mode is the manual mode, the processor 31 refers to the manual information stored in the storage device 32 and reads information such as a manual page associated with the operation information from the storage device 32. If the action mode is the search mode, the processor 31 reads information associated with the operation information from the DB of the storage device 32. Alternatively, the processor 31 acts as a search engine and performs an Internet search based on the operation information to acquire a result thereof.

In step S105, the processor 31 transmits, to the terminal 4, associated information including the information acquired in step S104 by using the communication device 33.

In step S106, the processor 31 determines whether to end the process. For example, if it is determined that the process is to be ended due to reception of a disconnection request from the electronic musical instrument 2 or the terminal 4, the process proceeds to step S107, and if not, the process returns to step S103.

In step S107, the processor 31 performs an end process including a disconnection process with the electronic musical instrument 2 and the terminal 4, and ends the process of FIG. 6.

### <Processing example of terminal>

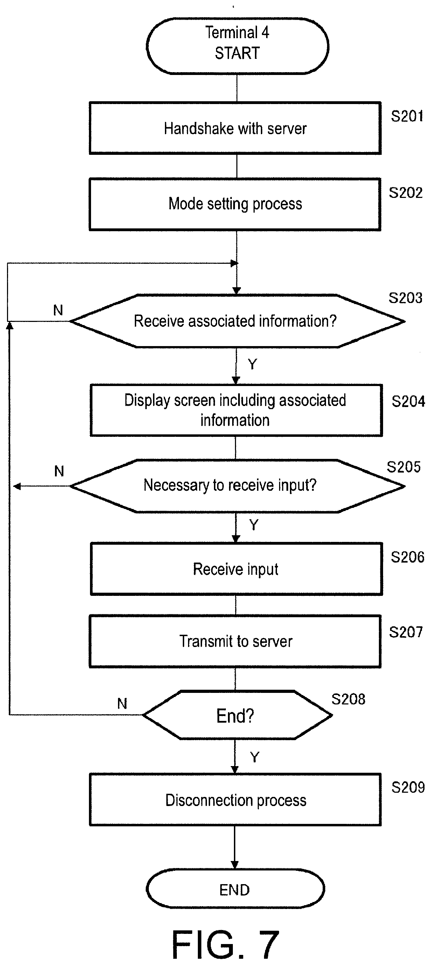

FIG. 7 is a flowchart showing a processing example in the terminal 4. The process shown in FIG. 7 is performed by the processor 41 of the terminal 4. The process shown in FIG. 7 may be started as the user 11 operates the terminal 4 and activates an application program (app) which serves for operation support of the electronic musical instrument 2 and is installed in the storage device 42. Further, the process may be started as the terminal 4 receives a connection request from the server 3 and activates the application. Further, in the case where the communication device 43 has received a connection request from the server 3, the processor 41 may display, on the display 45, a pop-up display of the connection request to prompt the user 11 to activate the application. This embodiment illustrates a case where an application for operation support of the electronic musical instrument 2 has been installed in the terminal 4. However, the terminal 4 may also receive, from the server 3, data (screen data) of a web page including various information for operation support of the electronic musical instrument 2 and display the web page on the display 45.

In step S201, the processor 41 performs a handshake with the server 3. This handshake may be performed in response to a connection request from the server 3 or may be performed by transmitting a connection request to the server 3.

In step S202, the processor 41 performs a mode setting process. For example, the processor 41 provides a user interface (UI) for the user 11 to select an action mode of the terminal 4 by using the input device 44 and the display 45. The processor 41 transmits, to the server 3, information indicating the action mode selected by the user 11 via the UI by using the communication device 43.

In step S203, the processor 41 enters a state of waiting for associated information from the server 3. If it is determined that the associated information has been received, the process proceeds to step S204.

In step S204, the processor 41 displays a screen including the associated information on the display 45. The expression form of the associated information may include expression by any of texts, symbols, figures, images, and videos. A sound indicating the associated information may also be outputted along with the screen.

In step S205, the processor 41 determines whether it is necessary to receive an input of the user 11 according to the screen displayed in step S405. If it is determined that reception is necessary, the process proceeds to step S206, and if not, the process proceeds to step S203 and waits for next associated information.

In step S206, the processor 41 receives information which the user 11 has inputted by using the input device 44 with reference to the screen.

In step S207, the processor 41 transmits the received information to the server 3 by using the communication device 43.

In step S208, the processor 41 determines whether to end the process. For example, if it is determined that the process is to be ended according to an end operation of the user 11, the process proceeds to step S209, and if not, the process returns to step S203.

In step S209, the processor 41 performs an end process including a disconnection process with the server 3, and ends the process of FIG. 7.

### <Action example 1>

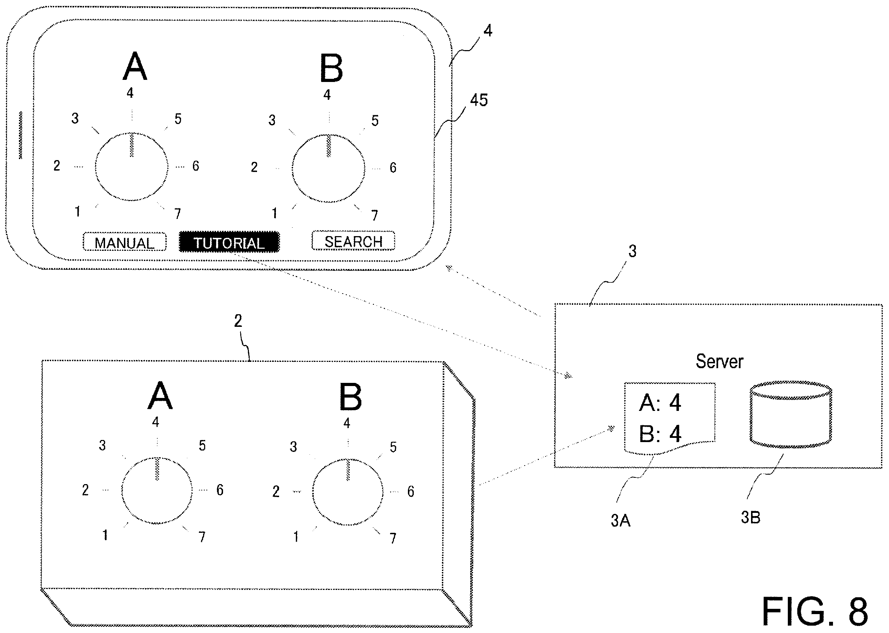

FIG. 8 to FIG. 12 are views illustrating an action example 1. In FIG. 8, the electronic musical instrument 2 includes knobs A and B as an example of the operator. In the case where the user 11 wants to know the settings of the knobs A and B, he/she turns on the power of the electronic musical instrument 2, activates the application of the terminal 4, and connects the electronic musical instrument 2 and the terminal 4 to the server 3. The server 3 includes the virtual machine information 3A and the DB 3B. The virtual machine information 3A includes identifiers of the knobs A and B of the electronic musical instrument 2 and information indicating their states.

The user 11 may select an action mode of the terminal 4 by pressing any of a manual button (MANUAL), a tutorial button (TUTORIAL), and a search button (SEARCH) displayed on the display 45 upon activation of the application. For example, when the tutorial button is pressed, information indicating the tutorial mode is transmitted from the terminal 4 to the server 3, and the processor 31 of the server 3 performs a process according to the tutorial mode. For example, the processor 31 acquires operation information (the setting value of the knob A is 4; the setting value of the knob B is 4) indicating the current states of the knobs A and B from the electronic musical instrument 2. The processor 31 updates the virtual machine information 3A with the operation information. Accordingly, the identifier "A" of the knob A and its state "4" are stored in association with each other. Further, the identifier "B" of the knob B and its state "4" are stored in association with each other. Further, the processor 31 reads information corresponding to the operation information from the DB 3B, and transmits, to the terminal 4, associated information including an instruction for displaying images of the knobs A and B according to the contents of the virtual machine information 3A.

In the terminal 4, the processor 41 receives the associated information and displays, on the display 45, images of the knobs A and B whose values are respectively set to 4 according to the virtual machine information 3A as a screen related to the tutorial. The image data of the knobs A and B may be stored in the terminal 4 in advance, or may be included in the associated information and provided to the terminal 4.

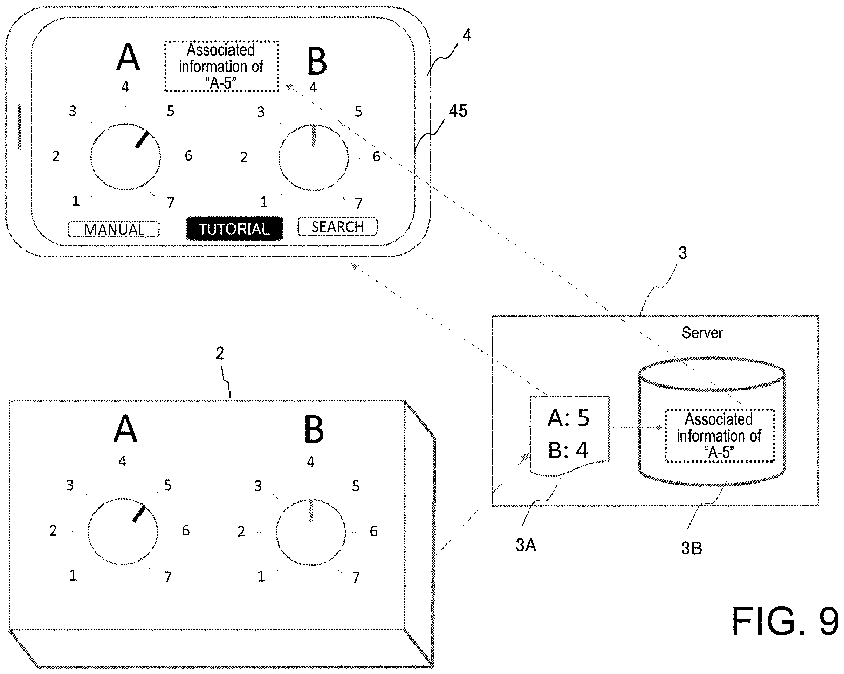

In FIG. 9, it is assumed that the user 11 operates the knob A of the electronic musical instrument and changes the setting value from 4 to 5. Then, the CPU 10 of the electronic musical instrument 2 generates operation information indicating that the setting value of the knob A has been changed to 5, and transmits the operation information to the server 3.

In the server 3, the processor 31 changes (updates) the state (setting value) of the knob A from 4 to 5 with respect to the virtual machine information 3A, reads, from the DB 3B of the storage device 32, information associated with the change of the setting value of the knob A to 5, and transmits, to the terminal 4, associated information including information indicating the change in the setting value of the knob A based on the virtual machine information 3A and the information read from the storage device 32.

In the terminal 4, the processor 41 changes the setting value of the image of the knob A displayed on the display 45 to 5 based on the associated information. Further, the processor 41 displays, on the display 45, the information associated with the change in the setting value of the knob A to 5. The associated information includes, for example, information related to an operation of the knob A obtained according to an Internet search or the like.

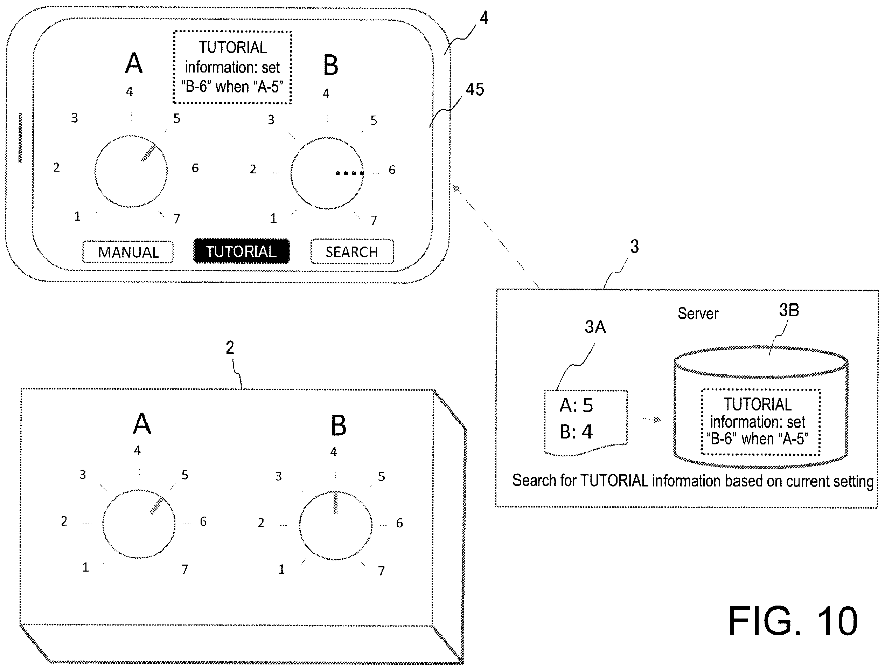

As shown in FIG. 10, as the information associated with the change in the setting value of the knob A to 5, the processor 31 may read, from the storage device 32, information indicating changing the setting value of the knob B to 6, and transmit associated information including this information to the terminal 4. At this time, the associated information includes information indicating the knob B, which is information specifying the operator, and information indicating changing the setting value of the knob B to 6, which is information indicating an operation method of the operator.

Upon receiving the associated information, the processor 41 of the terminal 4 displays, on the display 45, information indicating that the setting value of the knob B is set to 6 when the setting value of the knob A is 5. Further, the processor 41 may display an image of the knob B whose setting value is set to 6.

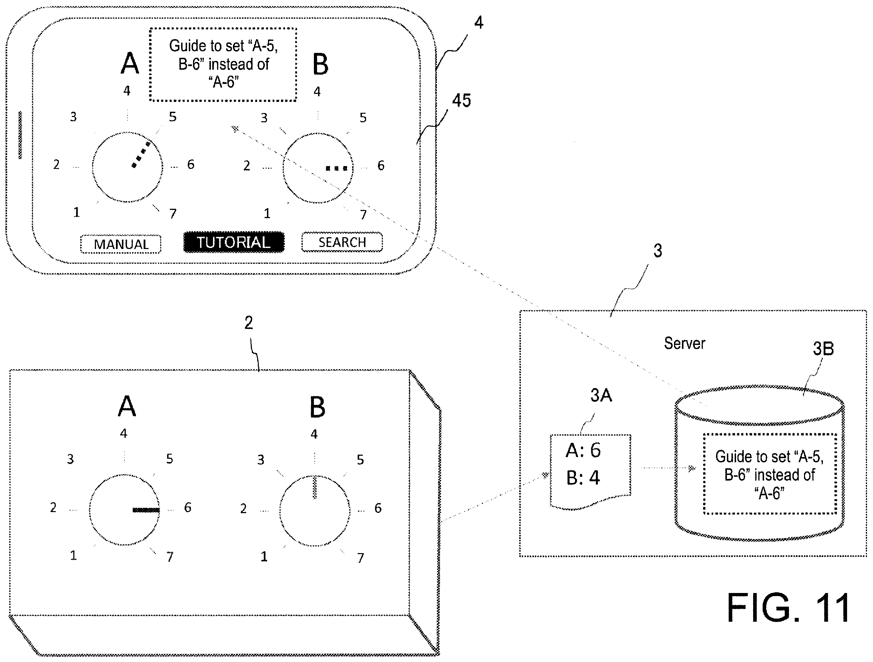

As shown in FIG. 11, in the case where the setting value of the knob A in the electronic musical instrument 2 has been changed from 4 to 6 and such operation information has been transmitted to the server 3, the processor 31 of the server 3 updates the state of the knob A to "6" in the virtual machine information 3A. Further, as the information corresponding to the operation information, the processor 31 reads, from the DB 3B, information prompting setting the setting value of the knob A to 5 instead of 6 and further setting the setting value of the knob B to 6, generates associated information including this information, and transmits the associated information to the terminal 4. Accordingly, in the case where the user 11 has performed an erroneous operation (changing the knob A from 4 to 6), it is possible to guide the user to the correct operation.

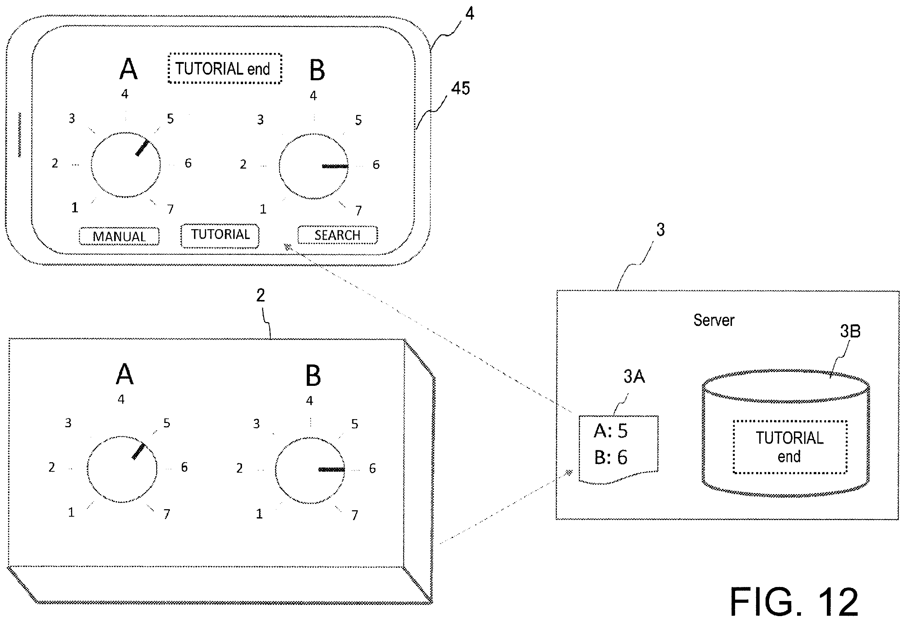

As shown in FIG. 12, the user 11 who has referred to the screen (tutorial screen) of the display 45 shown in FIG. 10 or FIG. 11 sets the setting value of the knob A to 5 and sets the setting value of the knob B to 6 according to the tutorial screen. Then, such operation information is transmitted from the electronic musical instrument 2 to the server 3.

In the server 3, the processor 31 updates the state of the knob A to "5" and updates the state of the knob B to "6" in the virtual machine information 3A. Further, the processor 31 reads, from the DB 3B, information corresponding to the operation information, generates associated information including an instruction for displaying, on the tutorial screen, images of the knobs A and B whose setting values are respectively set to 5 and 6 and displaying that the tutorial has ended, and transmits the associated information to the terminal 4.

In the terminal 4, the processor 41 displays, on the display 45, an image in which the knob A has been set to 5 and the knob B has been set to 6 based on the associated information. In addition, it is displayed on the display 45 that the tutorial has ended. Accordingly, the user 11 can properly set the knobs A and B by using the tutorial mode.

### <Action example 2>

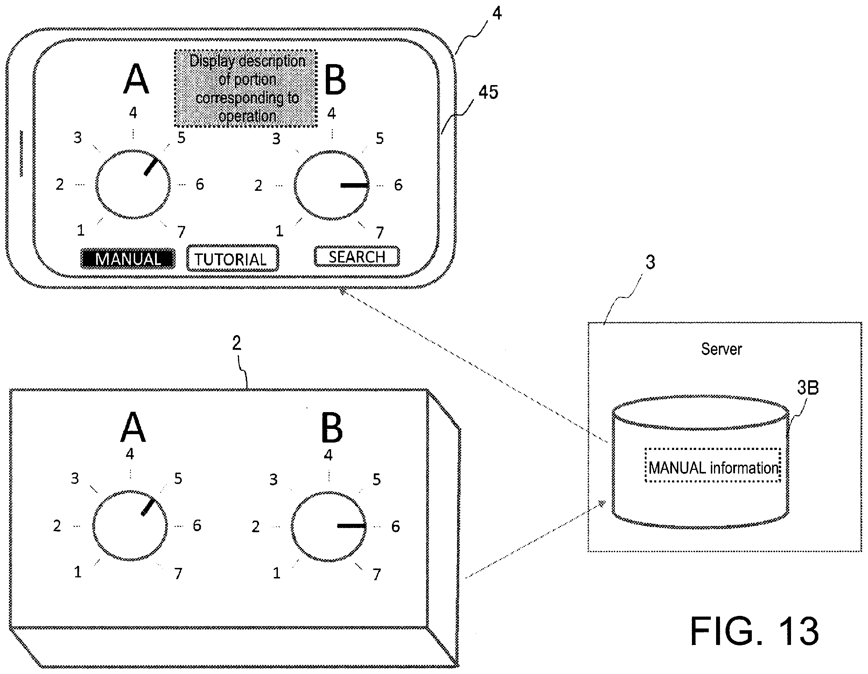

FIG. 13 is a view illustrating an action example 2. In the example shown in FIG. 13, the user 11 selects the manual mode as the action mode of the terminal 4 by operating the terminal 4, and the server 3 has entered a state of performing the process in the manual mode. It is assumed that operation information indicating that the user 11 has set the setting value of the knob A to 5 and has set the setting value of the knob B to 6 has been transmitted to the server 3, for example.

In the server 3, the processor 31 generates associated information including information indicating the states of the knobs A and B based on the virtual machine information 3A and information of descriptions (corresponding page in the electronic manual or the like) related to the knobs A and B in the electronic manual of the electronic musical instrument 2 read from the DB 3B, and transmits the associated information to the terminal 4. In the terminal 4, the processor 41 displays an image showing the current setting contents "5" and "6" of the knobs A and B and the descriptions related to the knobs A and B in the electronic manual based on the associated information. Therefore, in the manual mode, the user 11 may refer to the manual information related to the operator being operated on the display 45 of the terminal 4.

### <Action example 3>

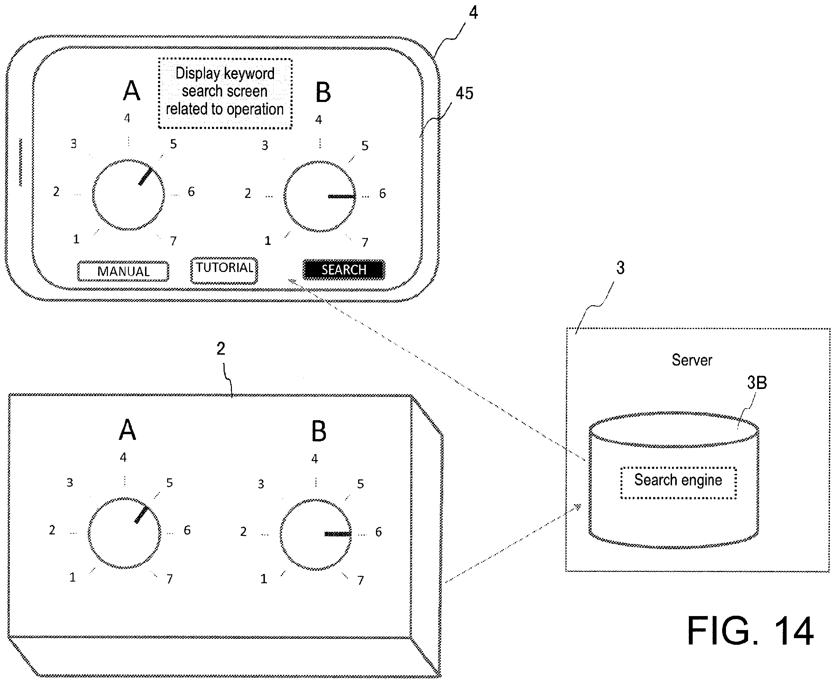

FIG. 14 is a view illustrating an action example 3. In the example shown in FIG. 14, the user 11 selects the search mode (SEARCH) as the action mode of the terminal 4 by operating the terminal 4, and the server 3 has entered a state of performing a search process. It is assumed that operation information indicating that the user 11 has set the setting value of the knob A to 5 and has set the setting value of the knob B to 6 has been transmitted to the server 3, for example.

In the server 3, the processor 31 updates the states of the knobs A and B stored in the virtual machine information 3A to "5" and "6". Further, the processor 31 acts as a search engine, extracts a keyword (stored in advance) related to the operation information from the DB 3B of the storage device 32, and searches the network 1 for information associated with this keyword. Then, associated information including information indicating the search result is transmitted to the terminal 4.

In the terminal 4, the processor 41 displays, on the display 45, the information indicating the search result included in the associated information. Therefore, in the search mode, the user 11 may refer to the search result of the information related to the operator being operated on the display 45 of the terminal 4.

### <Action example 4>

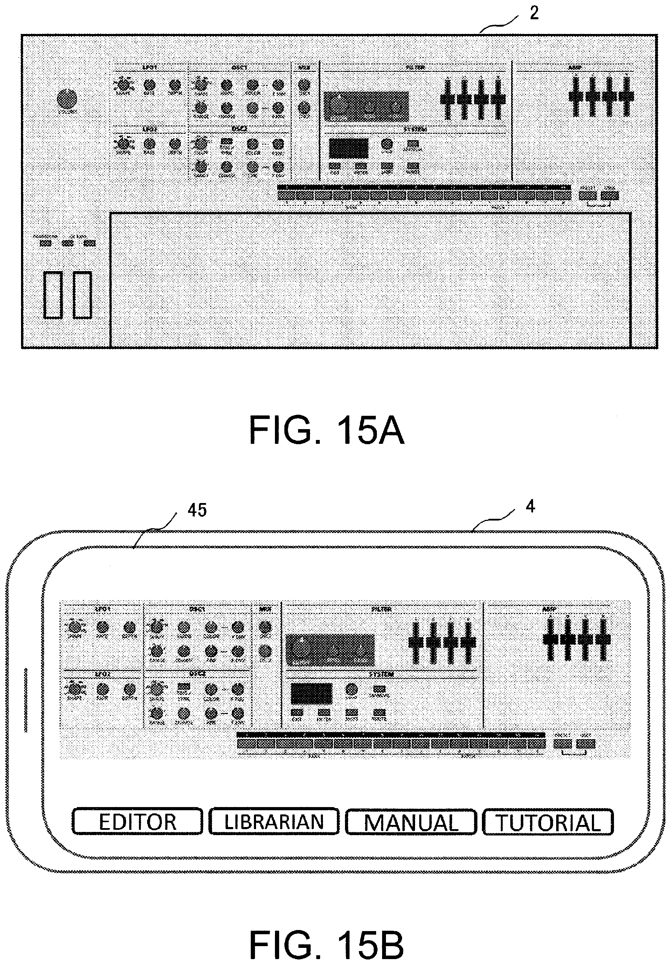

FIG. 15A, FIG. 15B, FIG. 16, FIG. 17A, FIG. 17B, FIG. 18, FIG. 19, FIG. 20A, FIG. 20B, FIG. 21, FIG. 22A, and FIG. 22B are views illustrating an action example 4. FIG. 15A shows an operation panel of a synthesizer as an example of the electronic musical instrument 2 according to the action example 4. The synthesizer includes a plurality of operators (buttons, knobs, sliders, etc.) for setting a pitch, a volume, a timbre, etc. The user 11 may generate a desired audio signal (musical tone) by operating the operators.

As shown in FIG. 15B, in the terminal 4, by executing an application for operation support of the electronic musical instrument 2 installed in advance, the processor 41 displays an image of the operation panel of the synthesizer on the display 45. Further, the display 45 displays buttons for the user 11 to select an action mode such as a manual mode and a tutorial mode.

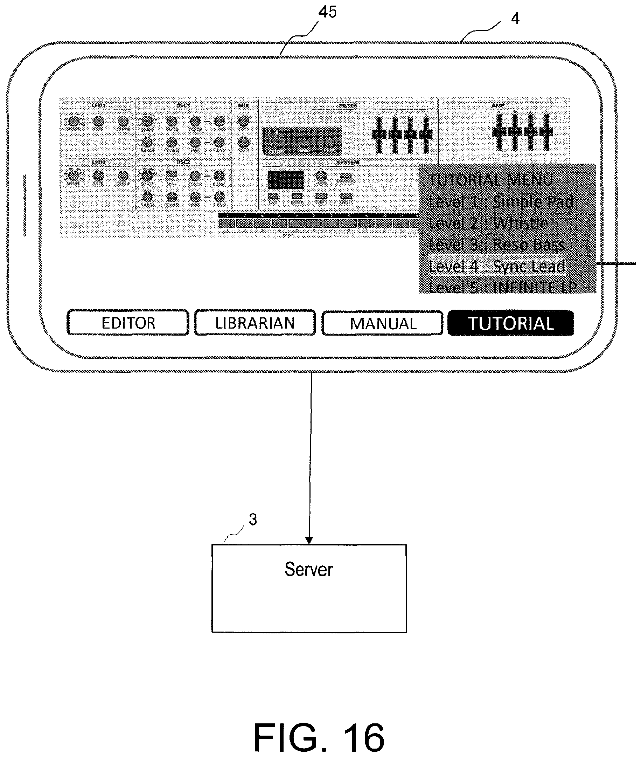

As shown in FIG. 16, when the user 11 presses the tutorial button to select the tutorial mode, the processor 41 of the terminal 4 transmits, to the server 3, information indicating that the action mode is the tutorial mode. In addition, the processor 41 displays a window of a tutorial menu on the display 45.

The window shows levels and scenario names of the operation procedure corresponding to the levels. The level indicates the complexity of the operation procedure (number of procedure), and the scenarios are sequentially arranged according to easiness indicated by the number of procedure. However, the number of scenarios of the operation procedure and the arrangement sequence of the plurality of scenarios may be set as appropriate. The scenario of the operation procedure is composed of one or more steps, and in each step, operation of one or more operators is instructed. The example of FIG. 16 shows an example in which a level 4 scenario (creating a timbre named "Sync Lead") is selected by the user 11.

Information indicating the selection result (level 4) of the scenario is transmitted to the server 3. The storage device 32 of the server 3 stores information corresponding to the operation information in advance for each step of each scenario of the tutorial.

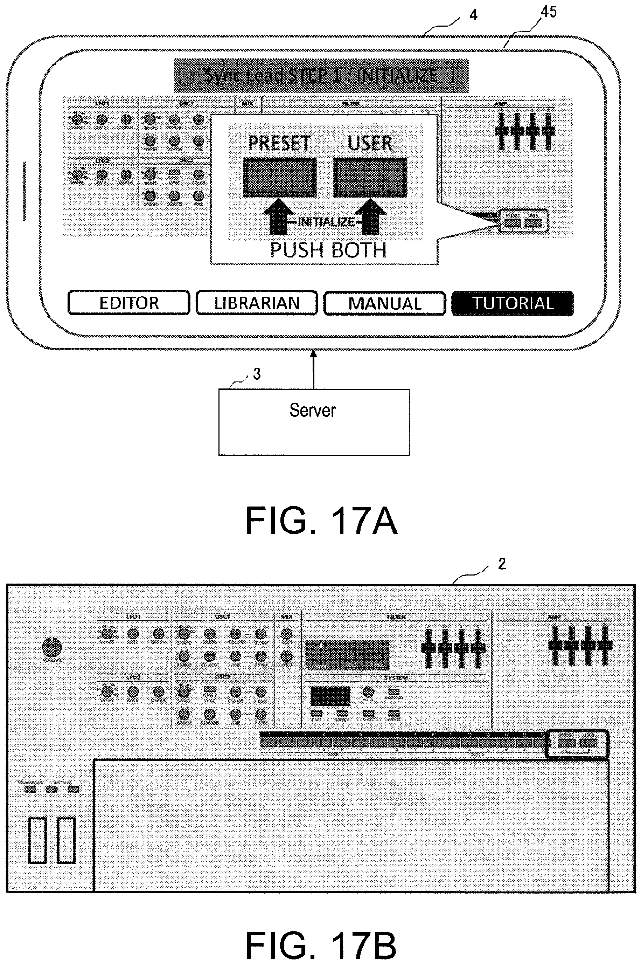

When the server 3 receives the information indicating the selection result of the scenario, the processor 31 of the server 3 transmits, to the terminal 4, associated information including a display instruction of a screen corresponding to an initial step (step 1) in the scenario. Upon receiving the associated information, the processor 41 of the terminal 4 displays a screen related to step 1 on the display 45 according to the display instruction. In the example shown in FIG. 17A, in step 1, a tutorial screen is displayed showing that both a preset button and a user button at the lower right of the operation panel of the electronic musical instrument 2 (see FIG. 17B) are pressed. In the tutorial screen, the preset button and the user button are enlarged and displayed, and further, a text prompting pressing both of them is displayed.

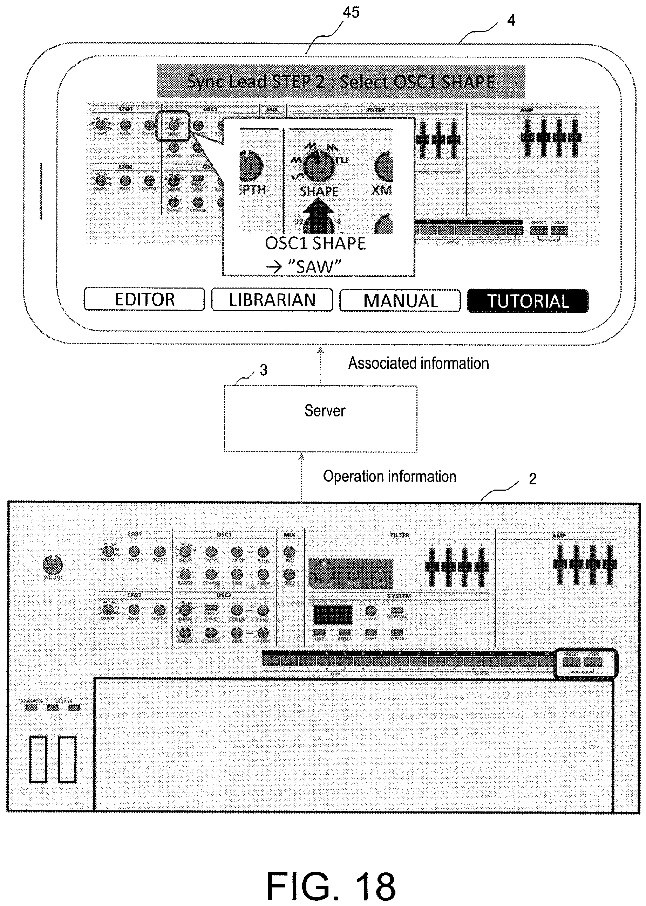

As shown in FIG. 18, the user 11 may press both the preset button and the user button (functioning as initialization buttons) of the electronic musical instrument 2 according to the tutorial screen corresponding to step 1.

Then, the CPU 10 of the electronic musical instrument 2 generates operation information indicating that both the preset button and the user button have been pressed, and transmits the operation information to the server 3. In the server 3, the processor 31 generates associated information corresponding to the operation information received from the electronic musical instrument 2 and transmits the associated information to the terminal 4. The associated information includes a display instruction of a tutorial screen corresponding to a next step. If the processor 31 determines that the operation information is an erroneous operation in step 1, a display instruction of a screen requesting redoing the operation is transmitted to the terminal 4, and the processor 41 of the terminal 4 displays, on the display 45, a screen requesting redoing according to the display instruction.

FIG. 18 shows that the terminal 4 receives associated information corresponding to the correct operation information, and the processor 41 displays a tutorial screen in the next step (step 2) on the display 45. In the tutorial screen of step 2, the knob on the upper left of the operation panel of the electronic musical instrument 2 is enlarged and displayed, and a text indicating the setting value of the knob is displayed. In the example shown in FIG. 18, the knob (operator) in step 2 is a knob for setting a waveform of "oscillator 1", and it is instructed to set the waveform to a sawtooth wave "SAW" by operating the knob.

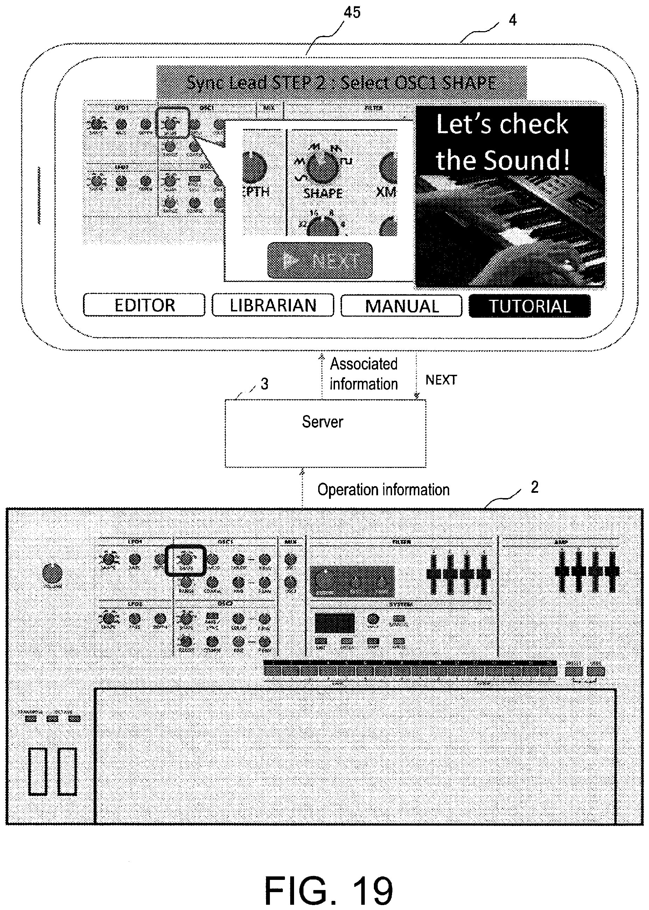

As shown in FIG. 19, when the user 11 adjusts a pointing position of the knob to "SAW", operation information corresponding to this operation is transmitted to the server 3. As associated information corresponding to the operation information, the server 3 displays, on the tutorial screen, information prompting actually playing the electronic musical instrument 2 to check the sound (performance sound). In the example shown in FIG. 19, the information prompting checking the sound is a text and an image, but the information may also be at least one of them.

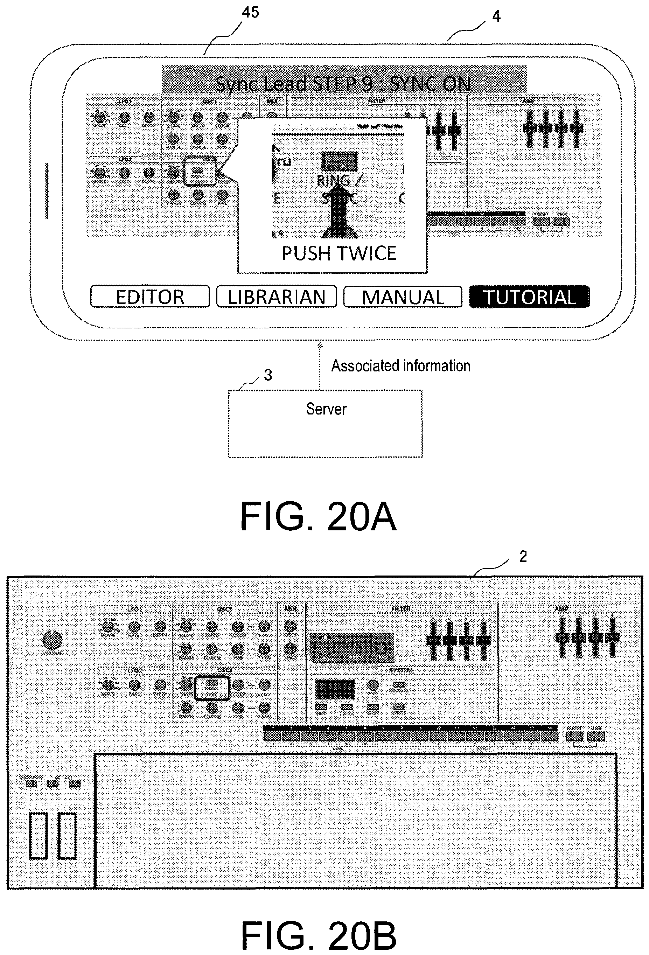

When the check of the sound is ended, the user 11 presses a NEXT button displayed on the tutorial screen. Then, as shown in FIG. 20A, the processor 41 transmits, to the server 3, a signal (NEXT) to advance the scenario to a next step. Upon receiving the NEXT signal, the server 3 transmits, to the terminal 4, associated information including a display instruction of a tutorial screen related to the next step.

FIG. 20A shows an example of a tutorial screen in a case where the operation procedure has proceeded to step 9. In this tutorial screen, a button (see FIG. 20B) located on the middle left side of the operation panel of the electronic musical instrument 2 is enlarged and displayed, and information prompting pressing this button twice is displayed. By pressing the button twice, an output of "oscillator 2" can be synchronized with an output of "oscillator 1".

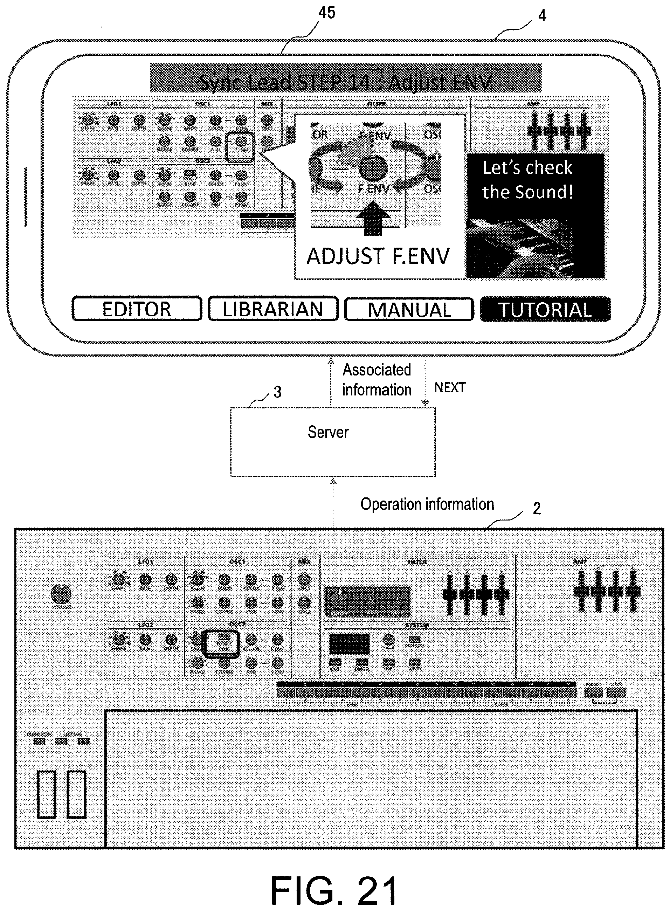

As shown in FIG. 21, when the user 11 presses this button twice, operation information indicating this operation is transmitted to the server 3. If the server 3 determines that the operation information indicates a correct operation, the server 3 transmits, to the terminal 4, associated information corresponding to the operation information.

The terminal 4 displays a tutorial screen corresponding to an instruction included in the associated information. In the example of FIG. 21, in the tutorial screen, information is displayed to prompt an operation on a knob referred to as "F.ENV" on the middle left side of the operation panel for adjusting an envelope of "oscillator 1". At this time, information indicating an operating range of the knob and information prompting adjusting the knob by listening to the actual performance sound while operating the knob are displayed on the tutorial screen. When the adjustment is completed, the user 11 presses a NEXT button (not shown) displayed on the tutorial screen. Then, a NEXT signal is transmitted to the server 3.

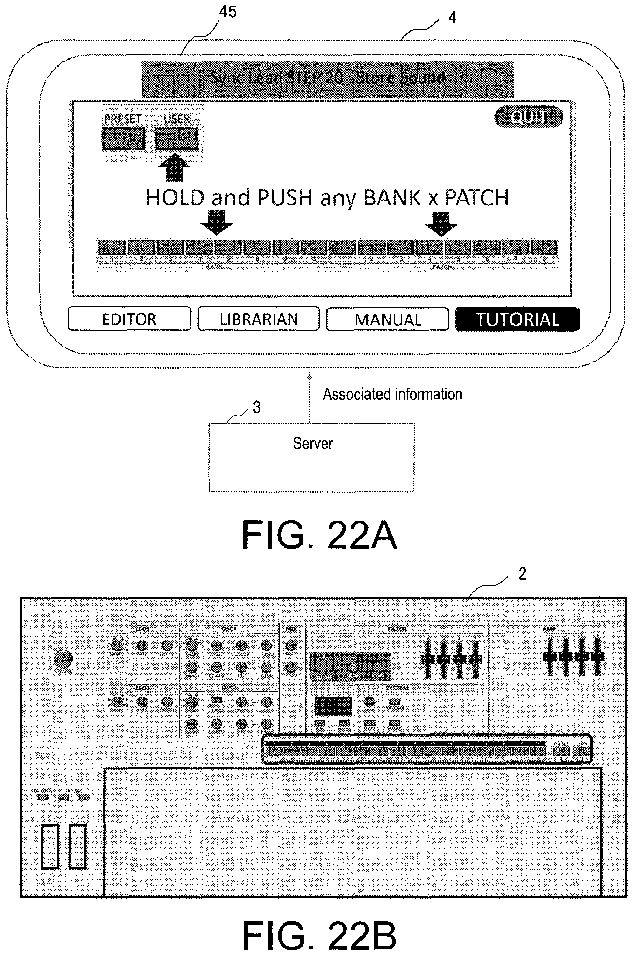

Then, upon receiving the NEXT signal, the server 3 transmits, to the terminal 4, associated information including a display instruction of a tutorial screen of a next step. For example, as shown in FIG. 22A, the terminal 4 displays, on the display 45, a tutorial screen prompting saving values set in the steps up to this point to banks or patches available to the user 11, by using a user button, bank buttons, and patch buttons (see FIG. 22B).

The user 11 may save (store) the parameter group set according to the tutorial to the HDD 13 of the electronic musical instrument 2 as bank or patch information. Accordingly, in the tutorial mode, the user 11 can easily set complicated or difficult settings by referring to the tutorial screen corresponding to each step and operating the operators according to the instructions on the screen. In particular, since the tutorial screen displays more detailed information than the screen of the display device 15 of the electronic musical instrument 2 in forms that cannot be expressed by the display device 15, even if the electronic musical instrument 2 does not have a display device or has a simple (low performance) display device, the user 11 can easily perform proper operations on the electronic musical instrument 2.

By using a smartphone that the user 11 usually uses as a terminal for displaying the tutorial screen (including a manual screen and a search result screen to be described later), it is possible to avoid the need to provide an expensive display in the electronic musical instrument 2. Also, the user 11 does not need to purchase a separate display for referring to the tutorial screen. In the case where the terminal 4 acts in the manual mode or the search mode, the terminal 4 may be used as a terminal for displaying a manual screen or a search result screen displayed according to the associated information from the server 3.

### <Effects of embodiments>

In the embodiments, the server 3 (information processing device) includes a processor 31 (control part). The server 3 (processor 31) receives operation information of the electronic musical instrument 2 from the electronic musical instrument 2. Further, the server 3 (processor 31) transmits operation associated information of the electronic musical instrument 2 corresponding to the operation information to a terminal 4 of the user 11 of the electronic musical instrument 2 that is different from the electronic musical instrument 2 (independent of the electronic musical instrument 2). Accordingly, even if the electronic musical instrument 2 does not have a display device or has a display device having low performance, it is possible to suitably provide the user 11 with information related to the operation of the electronic musical instrument 2.

Further, the processor 31 of the server 3 transmits, to the terminal 4, operation associated information of the electronic musical instrument 2 corresponding to each of one or more steps constituting an operation procedure of the electronic musical instrument 2 according to the operation information or information (NEXT information and the like) received from the terminal 4. Accordingly, by transmitting the operation associated information including a display instruction of a tutorial screen corresponding to each step from the server 3 to the terminal 4, the tutorial screen of each step can be displayed on the terminal 4.

Further, the processor 31 of the server 3 may transmit, to the terminal, operation associated information including an instruction for displaying an operator (input device 44) of the electronic musical instrument 2 to be operated in each of one or more steps and an operation method of the operator. Accordingly, the user 11 can easily learn about the operator to be operated and the operation method thereof by referring to the tutorial screen.

Further, the processor 31 of the server 3 may transmit, to the terminal, operation associated information including an instruction for displaying a current state of an operator to be operated in each of one or more steps. Accordingly, it is possible to learn about the current state of the target operator of the electronic musical instrument 2 by referring to the screen of the terminal 4.

Further, the processor 31 of the server 3 may receive operation information indicating a correct operation of an operator from the electronic musical instrument 2 in each of one or more steps. In this case, the processor 31 of the server 3 may transmit, to the terminal 4, operation associated information including an instruction for displaying an operator to be operated in a next step and an operation method of the operator. In the server 3, the procedure may be advanced while confirming that the operation is correct.

Further, it is likely that the processor 31 of the server 3 may receive operation information indicating an erroneous operation of an operator from the electronic musical instrument 2 in each of one or more steps. In this case, the processor 31 may transmit, to the terminal 4, operation associated information including an instruction for displaying information indicating the operation error. Accordingly, it is possible to notify the user 11 of the operation error and prompt the user to perform the operation again.

Further, the processor 31 of the server 3 transmits, to the terminal 4, operation associated information including an instruction for displaying an operation manual (manual information) corresponding to operation information. Therefore, in the manual mode, the user 11 can have the terminal 4 display the manual information related to the target operator of the electronic musical instrument 2 and refer to the manual information.

Further, the processor 31 of the server 3 may transmit, to the terminal 4, a result of an information search using the operation information. Accordingly, in the search mode, the user 11 can have the display 45 of the terminal 4 display the result obtained by an Internet search or the like for information related to the target operator of the electronic musical instrument and refer to the result.

Further, the terminal 4 of the user 11 includes a processor 41 (control part). From the server 3 (information processing device) which receives operation information of the electronic musical instrument 2 from the electronic musical instrument 2, the terminal 4 may receive operation associated information of the electronic musical instrument 2 corresponding to the operation information. In addition, the terminal 4 may display information based on the operation associated information on the display 45 (display device). Accordingly, it is possible to provide the user 11 with information suitable for operating the electronic musical instrument 2.

Further, the processor 41 of the terminal 4 may display, on the display 45, information based on the operation associated information of the electronic musical instrument 2 corresponding to each of one or more steps constituting an operation procedure of the electronic musical instrument 2.

Further, based on the operation associated information, the processor 41 of the terminal 4 may display, on the display 45, an operator of the electronic musical instrument 2 to be operated in each of one or more steps and an operation method of the operator.

Further, based on the operation associated information, the processor 41 of the terminal 4 may display, on the display 45, a current state of an operator to be operated in each of one or more steps.

Further, in each of one or more steps, the processor 41 of the terminal 4 may display, on the display 45, an operator to be operated in a next step and an operation method of the operator based on operation associated information transmitted from the server 3 which has received the operation information indicating a correct operation of the operator.

Further, in each of one or more steps, the processor 41 of the terminal 4 may display, on the display 45, information indicating an operation error based on operation associated information transmitted from the server 3 which has received operation information indicating an erroneous operation of the operator. The configurations shown in the embodiments may be appropriately combined as long as they do not deviate from the objective.

### Reference Signs List

- 2: Electronic musical instrument
- 3: Server (information processing device)
- 4: Terminal
- 10: CPU
- 31, 41: Processor

## Claims

1. An information processing device (3), comprising a control part (31) which executes:
receiving operation information of an electronic musical instrument (2) from the electronic musical instrument (2); and transmitting operation associated information of the electronic musical instrument (2) corresponding to the operation information to a terminal (4) of a user of the electronic musical instrument (2), wherein the terminal (4) is different from the electronic musical instrument (2).

2. The information processing device (3) according to claim 1, wherein the control part (31) transmits, to the terminal (4), the operation associated information of the electronic musical instrument (2) corresponding to each of one or more steps constituting an operation procedure of the electronic musical instrument (2) according to the operation information or information received from the terminal (4).

3. The information processing device (3) according to claim 2, wherein the control part (31) transmits, to the terminal (4), the operation associated information comprising an instruction for displaying an operator of the electronic musical instrument (2) to be operated in each of the one or more steps and an operation method of the operator.

4. The information processing device (3) according to claim 3, wherein the control part (31) transmits, to the terminal (4), the operation associated information comprising an instruction for displaying a current state of the operator to be operated in each of the one or more steps.

5. The information processing device (3) according to claim 3 or 4, wherein in each of the one or more steps, in a case where operation information indicating a correct operation of the operator has been received from the electronic musical instrument (2), the control part (31) transmits, to the terminal (4), the operation associated information comprising an instruction for displaying an operator to be operated in a next step and an operation method of the operator.

6. The information processing device (3) according to any one of claims 3 to 5, wherein in each of the one or more steps, in a case where operation information indicating an erroneous operation of the operator has been received from the electronic musical instrument (2), the control part (31) transmits, to the terminal (4), the operation associated information comprising an instruction for displaying information indicating an operation error.

7. A terminal (4) of a user of an electronic musical instrument (2), wherein the terminal (4) is different from the electronic musical instrument (2) and comprises a control part which executes:
receiving, from an information processing device (3) receiving operation information of the electronic musical instrument (2) from the electronic musical instrument (2), operation associated information of the electronic musical instrument (2) corresponding to the operation information; and displaying, on a display device (45), information based on the operation associated information.

8. The terminal (4) according to claim 7, wherein the control part displays, on the display device (45), information based on operation associated information of the electronic musical instrument (2) corresponding to each of one or more steps constituting an operation procedure of the electronic musical instrument (2).

9. The terminal (4) according to claim 8, wherein the control part displays, on the display device (45), an operator of the electronic musical instrument (2) to be operated in each of the one or more steps and an operation method of the operator, based on the operation associated information.

10. The terminal (4) according to claim 9, wherein the control part displays, on the display device (45), a current state of the operator to be operated in each of the one or more steps based on the operation associated information.

11. The terminal (4) according to claim 9 or 10, wherein in each of the one or more steps, based on the operation associated information transmitted from the information processing device (3) which has received operation information indicating a correct operation of the operator, the control part displays, on the display device (45), an operator to be operated in a next step and an operation method of the operator.

12. The terminal (4) according to any one of claims 9 to 11, wherein in each of the one or more steps, based on operation associated information transmitted from the information processing device (3) which has received operation information indicating an erroneous operation of the operator, the control part displays, on the display device (45), information indicating an operation error.

13. An information processing method, wherein an information processing device (3) executes:
receiving operation information of an electronic musical instrument (2) from the electronic musical instrument (2); and
transmitting operation associated information of the electronic musical instrument (2) corresponding to the operation information to a terminal (4) of a user of the electronic musical instrument (2), wherein the terminal (4) is different from the electronic musical instrument (2).

14. An information processing method, wherein a terminal (4) of a user of an electronic musical instrument (2) is different from the electronic musical instrument (2) and executes:
receiving, from an information processing device (3) receiving operation information of the electronic musical instrument (2) from the electronic musical instrument (2), operation associated information of the electronic musical instrument (2) corresponding to the operation information; and
displaying, on a display device (45), information based on the operation associated information.

15. A program causing an information processing device (3) to execute the information processing method according to claim 13 or causing a terminal (4) to execute the information processing method according to claim 14.
